Europäisches Patentamt

European Patent Office

Office européen des brevets

(19)

(11) Veröffentlichungsnummer : **0 041 226**
**B1**

(12) **EUROPÄISCHE PATENTSCHRIFT**

(45) Veröffentlichungstag der Patentschrift :
28.08.85

(21) Anmeldenummer : 81104059.1

(22) Anmeldetag : 27.05.81

(51) Int. Cl.⁴ : **A 01 D 33/08**

(54) **Vorrichtung zur Feldreinigung von Rodungsfrüchten.**

(30) Priorität : 30.05.80 DE 3020535

(43) Veröffentlichungstag der Anmeldung :
09.12.81 Patentblatt 81/49

(45) Bekanntmachung des Hinweises auf die Patenterteilung : 28.08.85 Patentblatt 85/35

(84) Benannte Vertragsstaaten :
AT BE DE FR GB IT NL SE

(56) Entgegenhaltungen :
DE-A- 2 354 495
DE-A- 2 655 781
DE-B-     6 408
DE-B- 1 298 769
DE-C-   728 386
DE-C-   813 781
FR-A- 1 415 425
GB-A- 1 243 007
US-A- 2 533 793
US-A- 3 132 365
US-A- 3 853 271

(73) Patentinhaber : **Dietrich, Martin**
**Paternoster 5**
**D-8851 Mertingen (DE)**

(72) Erfinder : **Dietrich, Martin**
**Paternoster 5**
**D-8851 Mertingen (DE)**

(74) Vertreter : **Munk, Ludwig, Dipl.-Ing.**
**Prinzregentenstrasse 1**
**D-8900 Augsburg (DE)**

## Beschreibung

Die Erfindung betrifft eine Vorrichtung zur Feldreinigung von Rodungsfrüchten, insbesondere Zuckerrüben, mit mindestens einer im Durchlaufbetrieb mit Rodungsfrüchten beschickbaren Reinigungsstation, die mit wenigstens einer auf die zu reinigenden Rodungsfrüchte gerichteten Düse zur allseitigen Beaufschlagung der Rodungsfrüchte mit einem Druckmedium versehen ist.

Eine Vorrichtung dieser Art ist aus der DE-A-26 55 781 bekannt. Bei dieser bekannten Anordnung ist die Reinigungsstation als durch umlaufende Bügel oder dergleichen begrenzte, von den zu reinigenden Rodungsfrüchten durchsetzte Kammer mit mehreren Düsenkränzen ausgebildet. Anordnungen dieser Art haben sich zwar im Prinzip bewährt. Der Verbrauch an Reinigungsmedium, beim bekannten Ausführungsbeispiel Luft, ist jedoch nicht unbeträchtlich, insbesondere wenn es darum geht, die gesamte Oberfläche der zu reinigenden Rodungsfrüchte mit Druckmedium zu beaufschlagen.

Hiervon ausgehend ist es daher die Aufgabe der vorliegenden Erfindung, eine Vorrichtung eingangs erwähnter Art mit einfachen und daher kostengünstigen Mitteln so zu verbessern, daß bei vergleichsweise geringem Verbrauch an Reinigungsmedium dennoch eine zuverlässige Reinigung der gesamten Oberfläche der zu reinigenden Rodungsfrüchte sichergestellt ist.

Diese Aufgabe wird erfindungsgemäß dadurch gelöst, daß die Reinigungsstation eine in Umfangsrichtung angetriebene, stirnseitig offene und mit einer Stirnseite im Bereich einer Einwurfvorrichtung angeordnete, im Bereich ihrer Wandung mit Perforationen versehene Trommel aufweist, der eine den unter der Düse bzw. den Düsen hindurchführenden Weg der die Reinigungsstation durchlaufenden Rodungsfrüchte definierende Leiteinrichtung zugeordnet ist und daß die Düse bzw. Düsen, die als Venturidüse bzw. -düssen ausgebildet ist bzw. sind, in Umlaufrichtung stationär angeordnet und an einem stirnseitig in den Innenraum der Trommel hineinstechenden Halter befestifgt ist bzw. sind.

Die in Umfangsrichtung angetriebene Trommel bewerkstelligt hierbei gleichzeitig eine Drehung sowie einen Vorwärtstransport der Rodungsfrüchte entlang eines durch die Leiteinrichtung definierten Durchlaufwegs. Infolge der Drehung und des definierten Durchlaufwegs der Rodungsfrüchte ist dabei in vorteilhafter Weise sichergestellt, daß die Rodungsfrüchte im Verlauf ihres Transports ihre gesamte Oberfläche der hierauf gerichteten Düse bzw. den hierauf gerichteten Düsen darbieten, was eine zuverlässige Reinigung der gesamten Oberfläche gewährleistet, ohne daß eine Vielzahl von Düsen benötigt würde, was sich bereits positiv auf den Verbrauch an Reinigungsmedium auswirkt. Ein weiterer Vorteil in Richtung Einsparung von Reinigungsmedium ist darin zu sehen, daß infolge der Verwendung von Venturidüsen der der eigentlichen Druckquelle entnommene Druckmittelstrahl als Saugstrahl dient, durch den weiteres Reinigungsmedium angesaugt werden kann, was nicht nur eine hohe Verstärkung des der eigentlichen Druckquelle entnommenen Druckmittelstrahls ergibt, sondern auch die Ansaugung unterschiedlicher Reinigungsmedien, beispielsweise einer Flüssigkeit, ermöglicht, die zu einer gewissen Härtung des Luftstrahls und damit zu einer erwünschten Erhöhung der Schlagkraft führt, was sich ebenfalls positiv auf die sparsame Verwendung von Reinigungsmedium auswirkt. Hieraus ist erkennbar, daß die Erfindung die ihr gestellte Aufgabe mit einfachen und kostengünstigen Mitteln löst. Die mit der Erfindung erzielbaren Vorteile sind demnach insbesondere in einer ausgezeichneten Wirtschaftlichkeit zu sehen.

In zweckmäßiger Fortbildung der übergeordneten Maßnahmen kann die Innenoberfläche der Trommel mit einem Schneckengang versehen sein. Hierdurch ist auch dann noch ein zuverlässiger Transport der Rodungsfrüchte sichergestellt, wenn die Trommel in Transportrichtung nicht geneigt ist. Gleichzeitig ergibt sich hierdurch in vorteilhafter Weise eine definierte Transportgeschwingigkeit, was eine zielgenaue Beaufschlagung der Rodungsfrüchte mit Reinigungsmedium erleichtert und sich/daher ebenfalls positiv auf einen sparsamen Verbrauch von Reinigungsmedium auswirkt.

Die US-A-2 533 793 zeigt zwar eine Vorrichtung zum Ernten von Zuckerrüben etc., bei der die gerodeten Früchte in eine in Umfangsrichtung angetriebene, stirnseitig offene und im Bereich ihrer vorderen Stirnseite eine Rodeeinrichtung tragende, mit umfangsseitigen Perforationen versehene Trommel eingeworfen werden, die im Bereich ihrer Innenoberfläche mit einem Schneckengang versehen ist. Hierbei werden die in die Trommel eingeworfenen Rüben zwar ebenfalls einer Drehung und einem Vorwärtstransport unterworfen. Es findet jedoch lediglich eine mechanische Reinigung derart statt, daß der von selbst von den Rodungsfrüchten abfallende Schmutz aufgrund der Perforationen der Trommel abgesiebt wird. Eine Beaufschlagung der Rodungsfrüchte mit einem Reinigungsmedium findet hierbei nicht statt. Dementsprechend fehlt bei der bekannten Anordnung auch eine den Transportweg der Rodungsfrüchte definierende Leiteinrichtung. Es besteht daher die Gefahr, daß die in der Trommel sich befindenden Rodungsfrüchte durch die Drehung der Trommel nach oben transportiert und dann aufgrund ihres Gewichts in den unteren Bereich der Trommel zurückfallen, wobei sich der zunächst an sich nur locker haftende Schmutz verdichten kann. Der bei der bekannten Anordnung erzielbare Reinigungseffekt ist daher äußerst gering.

Gemäß einer weiteren, vorteilhaften Ausgestaltung der übergeordneten Maßnahmen kann es sich im Zusammenhang mit einer Erntemaschine als besonders vorteilhafter erweisen, wenn eine Reinigungsstation im Transportweg der Rodungsfrüchte zwischen Rodeeinrichtung und Aufnahmebunker unmittelbar hinter der Rodeeinrichtung angeordnet ist. Hierdurch ist sichergestellt, daß eine Verdichtung des an den zu reinigenden Rodungsfrüchten haftenden Schmutzes während des Transports unterbleibt. Im Falle eines nachträglichen Einbaus der erfindungsgemäßen Vorrichtung in eine Erntemaschine kann es sich als besonders zweckmäßig erweisen, eine Reinigungsstation im Bereich des Bunkereinwurfs anzuordnen.

Weitere zweckmäßige Ausgestaltungen und vorteilhafte Weiterbildungen der übergeordneten Maßnahmen ergeben sich aus den restlichen abhängigen Ansprüchen.

Nachstehend wird ein Ausführungsbeispiel der Erfindung anhand der Zeichnung näher erläutert.

In der Zeichnung zeigen :

Figur 1 ein Ausführungsbeispiel mit einer in eine Rübenerntemaschine eingebauten, hinter dem Rodeschar angeordneten Trommel und stationär angeordneten Düsen,

Figur 2 ein Ausführungsbeispiel mit einer im Bereich des Bunkereinwurfs angeordneten Trommel,

Figur 3 eine als Doppel-Venturidüse ausgebildete Düse im Schnitt,

Figur 4 eine vorteilhafte Strahlrohrausführung ebenfalls im Schnitt und

Figur 5 ein Ausführungsbeispiel mit einer in Rübentransportrichtung hin- und hergehenden Düse.

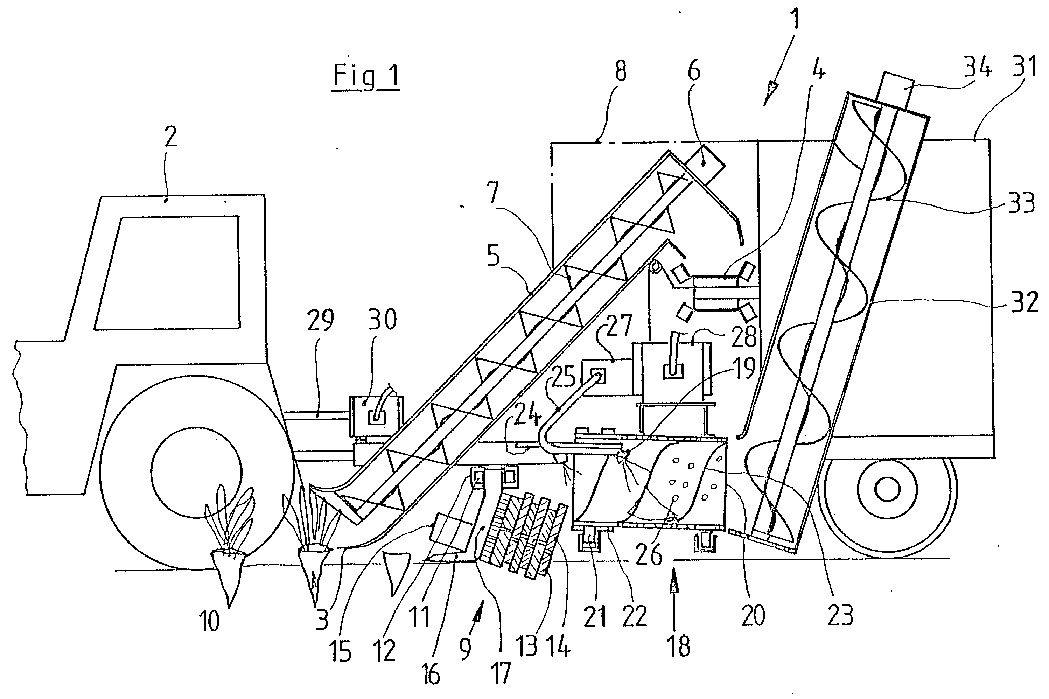

Die in Figur 1 schematisch angedeutete und als Ganzes mit 1 bezeichnete Rübenerntemaschine ist an einen bei 2 angedeuteten Schlepper angehängt. Die Rübenerntemaschine 1 ist mit einem Köpfmesser 3 versehen, das am unteren Ende eines die abgeschnittenen Rübenköpfe aufnehmenden und zu einem Auslageband 4 transportierenden Förderrohr 5 angeordnet ist. Das Förderrohr 5 ist im dargestellten Ausführungsbeispiel mit einer mittels eines Hydraulikmotors 6 angetriebenen Schnecke 7 versehen. Das Auslageband 4 kann das aufgegebene Blattgut entweder neben der Maschine abwerfen, oder wie im dargestellten Ausführungsbeispiel einen Bunkel 8 beaufschlagen oder eine Saftpresse, die zur Erzeugung von Reinigungsflüssigkeit dient. Hinter dem Köpfmesser 3 befindet sich eine als Ganzes mit 9 bezeichnete Rodeeinrichtung, mit welcher die bei 10 angedeuteten Rüben angehoben und aufgenommen werden. Die Rodeeinrichtung 9 ist zweckmäßig seitlich verstellbar am Maschinengestell gelagert. Im dargestell ten Ausführungsbeispiel ist die Rodeeinrichtung 9 hierzu mit Hilfe von Laufrollen 11 wagenförmig in quer zur Fahrtrichtung sich erstreckenden, gestellseitig befestigten Laufschienen 12 aufgenommen. Die Rodeeinrichtung 9 besteht im dargestellten Ausführungsbeispiel aus von vorne nach hinten geneigten, V-förmig nach vorne geöffneten Walzenpaaren 13, 14, die mittels eines Hydraulikmotors 15 in Umfangsrichtung angetrieben sind. Im dargestellten Ausführungsbeispiel sind die Walzen der Walzenpaare 13, 14 so mit Oberflächenrillen bzw.-stegen versehen, daß sich ein gegenseitiger Eingriff ergibt. Mit Hilfe einer derartigen Rodeeinrichtung wird der bei üblichen Rodezinken sich bildende Staukegel und die dabei sich ergebende Erdreichverdichtung vermieden. Gleichzeitig ist infolge der Doppelwalzen-Anordnung eine verhältnismäßig große Rodetiefe gewährleistet. Die Walzen 13, 14 der beiden Walzenpaare sind im dargestellten Ausführungsbeispiel an den beiden mit jeweils einem Gleitfuß 16 versehenen Schenkeln 17 eines gabelförmigen Trägers gelagert.

Zur Reinigung der gerodeten Rüben werden diese mit einem Druckmedium, vorzugsweise mit Luft bzw. mit einem Luft-Wassergemisch abgestrahlt. Hierzu durchlaufen die zu reinigenden Rüben eine als Ganzes mit 18 bezeichnete Reinigungsstation, die mit mehreren, auf die zu reinigenden Rüben gerichteten Düsen der bei 19 angedeuteten Art bestückt ist. Zur Bewerkstelligung einer vollständigen Reinigung der gesamten Rübenoberfläche werden die Rüben im dargestellten Ausführungsbeispiel unter gleichzeitiger Drehung um ihre Mittellängsachse an den Düsen 29 vorbeibewegt. Hierzu besteht die Reinigungsstation 18 im dargestellten Ausführungsbeispiel aus einer der Rodeeinrichtung 9 unmittelbar nachgeordneten, im Bereich ihrer Stirnseiten offenen Trommel 20, die in Umfangsrichtung angetrieben ist und deren Innenraum von den Düsen 19 beaufschlagt wird. Die Trommel 20 ist so im Maschinengestell gelagert, daß die gerodeten Rüben von der Rodeeinrichtung 9, deren Walzen die Rüben gleichzeitig auf entsprechende Höhe bringen, direkt über die offene Stirnseite in die Trommel 20 eingeworfen werden. Bei der dargestellten Erntemaschine 1 handelt es sich um eine sogenannte Einreihermaschine. Bei einer Mehrreihenmaschine mit mehreren, nebeneinander angeordneten Rodeeinrichtung, ist zweckmäßig jeder Rodeeinrichtung eine Reinigungsstation nachgeordnet, so daß sich einfach eine Vervielfachung der in Figur 1 gezeigten Anordnung ergibt.

Im dargestellten Ausführungsbeispiel ist die Trommel 20 auf gestellseitig gelagerten Stützrollen 21 abgesetzt und mit im Bereich ihres Umfangs angeordneten Spurkränzen 22 versehen. Zum Antrieb der Trommel kann diese von einem Treibriemen umfaßt sein. Im dargestellten Ausführungsbeispiel sollen einfach eine oder mehrere der Stützrollen 21 angetrieben sein und mit der Trommel 20 nach Art eines Reibrads zusammenwirken. Zur Bewerkstelligung des Rollenantriebs kann ebenfalls ein hier nicht näher dargestellter Hydraulikmotor vorgesehen sein. Die Innenoberfläche der Trommel 20 ist mit einem Schneckengang 23 versehen, der einen zuverlässigen Vorwärtstransport gewährleistet. Zur Unterstützung dieses Vorwärtstransports kann die Trommel 20 leicht in Förderrichtung geneigt sein. Die Drehbewegung der Rüben ergibt sich praktisch dadurch, daß diese sich bei laufender Trommel auf dem Innenumfang der Trommel abrollen müssen.

Die in den Innenraum der Trommel 20 hineinstrahlenden, auf die die Trommel durchsetzenden Rüben gerichteten Düsen 19 sind hier sowohl in Umfangsrichtung als auch in Rübentransportrichtung stationär angeordnet. Im dargestellten Ausführungsbeispiel sind die Düsen 19 an einem als außerhalb des Trommelzentrums in diese hineinragende Stange ausgebildeten Halter 24 befestigt und können daher auf einfache Weise mit Versorgungsleitungen der bei 25 angedeuteten Art gekuppelt sein. Die von der Rodeeinrichtung 9 in die Trommel 20 eingeworfenen Rüben werden durch die Trommel 20 vorwärtsbewegt und gleichzeitig in eine Drehbewegung um ihre Mittellängsachse versetzt. Hierdurch ist sichergestellt, daß die gesamte Rübenoberfläche von den durch die Düsen 19 abgegebenen Reinigungsstrahlen getroffen wird, auch wenn nur wenige Düsen vorgesehen sind. Im dargestellten Ausführungsbeispiel sind zwei hinterinander angeordnete Düsen vorgesehen, die zwekmäßig auch seitlich gegeneinander versetzt sein können. Der durch die Reinigungsstrahlen von den zu reinigenden Rüben abgesprengte Schmutz sowie das von den Düsen abgegebenen Reinigungsmedium entweicht durch die offenen Stirnseiten und insbesondere durch die Perforationen 26 im Bereich des Trommelmantels. Die mit den Düsen 19 gekoppelten Leitungen 25 führen im dargestellten Ausführungsbeispiel zu einem Kompressor 27, mittels dessen die Düssen 19 mit Druckluft beaufschlagbar sind. Der Kompressor 27 kann an den Schlepper 2 angebaut oder als Anhänger ausgebildet sein. Im dargestellten Ausführungsbeispiel ist der Kompressor 27 auf das Erntegerät 1 aufgehaut. Der Kompressor 27 kann zweckmäßig mittels eines Hydraulikmotors 28 angetrieben werden, dem eine von der Schlepperzapfwelle 29 aus antreibbare Hydraulikpumpe 30 zugeordnet ist, die in Figur 1 ebenfalls auf dem Maschinengestell der Erntemaschine angeordnet ist. Die Hydraulikpumpe 30 ist zweckmäßig so ausgelegt, daß hiermit sämtliche Hydraulikmotoren der Erntemaschine 1 angetrieben werden können.

Die in der Trommel gereinigten Rüben werden in einen Bunker 31 eingeworfen. Hierzu ist ein der Trommel 20 nachgeordneter Elevator 32 vorgesehen, welcher die gereinigten Rüben von der Reinigungsstation 18 abnimmt und in den Bunker 31 einwirft. Im dargestellten Ausführungsbeispiel ist der Elevator 32 als Förderrohr ausgebildet, das mit einer angetriebenen Schnecke 33 versehen ist. Zum Antrieb der Schnecke 33 kann zweckmäßig ein Hydraulikmotor 34 vorgesehen sein, der, wie weiter oben bereits angedeutet, ebenfalls durch die Pumpe 30 mit Hydraulikflüssigkeit versorgt wird.

Die Anordnung der Reinigungsstation 18 direkt hinter der Rodeeinrichtung 9 und damit die Ausschaltung eines längeren Transportwegs zwischen Rodung und Reinigung stellt sicher, daß der an den zu reinigenden Rodungsfrüchten haftende Schmutz im Verlauf des Transports nicht verdichtet wird, sondern in einem Verhältnismäßig lockeren Zustand sich befindet, was die Reinigung mit Hilfe von Reinigungsstrahlen erleichtert. Wo im Einzelfall etwa aus Platzgründen eine Anordnung der Reinigungsstation direkt hinter der Rodeeinrichtung nicht zweckmäßig oder möglich sein sollte, kann die reinigungsstation auch an jeder anderen Stelle im Bereich des Transportwegs derzu reinigenden Rodungsfrüchte von der Rodeeinrichtung zum Bunker angeordnet sein.

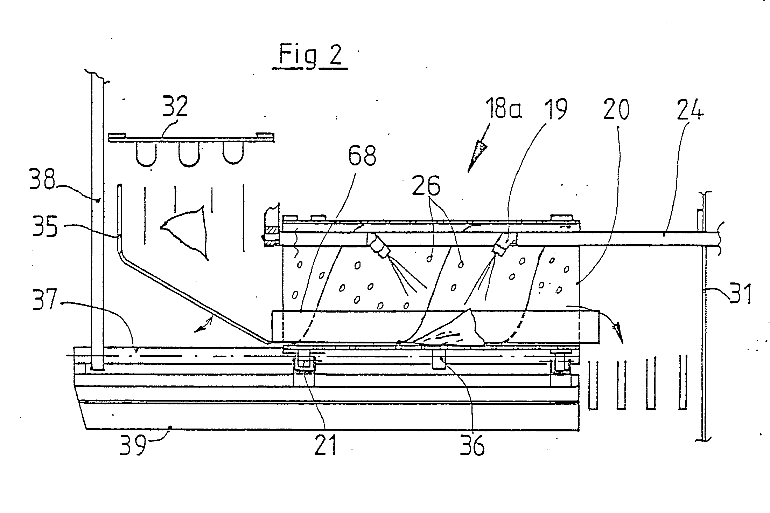

Bei dem in Figur 2 dargestellten Ausführungsbeispiel ist eine im Bereich des Bunkereinwurfs angeordnete Reinigungsstation 18a vorgesehen, die alternativ oder zusätzlich zu der Anordnung nach Figur 1 vorgesehen sein kann. Der Aufbau der Reinigungsstation gemäß Figur 2 kann dabei dem Aufbau der Reinigungsstation 18 gemäß Figur 1 entsprechen. Für gleiche Teile finden daher zweckmäßig gleiche Bezugszeichen Verwendung. Die Trommel 20 der als Ganzes mit 18a bezeichneten Reinigungsstation ist dabei so angeordnet, daß sie über eine Rutsche 35 direkt vom Elevator 32 aus beaufschlagbar ist und daß die sie verlassenden, gereinigten Rüben direkt in den Bunker 31 eingeworfen werden. Die Rutsche 35 kann zweckmäßig durch nebeinander angeordnete Federzinken gebildet werden. Die auf gestellseitig gelagerten Stützrollen 21 abgestützte Trommel 20 soll im vorliegenden Ausführungsbeispiel mittels eines an ihrem Umfang anliegenden Reibrads 36 angetrieben werden, das auf einer achsparallel gelagerten Welle 37 sitzt, die mittels eines Riemens 38 mit einem geeigneten Antriebsaggregat gekoppelt ist. Den durch die Trommel 20 hindurchlaufenden Rüben kann, wie Figur 2 weiter erkennen 1 äßt, eine Leiteinrichtung 68 zugeordnet sein, die sicherstellt, daß die Rüben auf geradem Wege durch die Trommel 20 hindurchlaufen und den von den Düsen 19 abgegebenen Reinigungsstrahlen nicht seitlich ausweichen können. Die Leiteinrichtung 68 kann durch einen die Trommel 20 durchsetzenden Blechstreifen oder dergleidchen gebildet werden, der seitlich neben dem von den Düsen 19 beaufschlagten, den Rüben zugeordneten Durchsatzweg im Bereich der Talsohle der Trommel 20 angeordnet ist. Eine derartige Leitvorrichtung kann auch bei der Trommel 20 gemäß Figur 1 Vorgesehen sein.

Der Düsenhalter 24 zur Aufnahme der Düsen 19 ist im Ausführungsbeispiel nach Figur 2 als parallel zur Trommelachse angeordnetes, außerhalb der Trommelmitte in die Trommel hineinstechendes Rohr ausgebildet, das in vorteilhafter Weise gleichzeitig als Versorgungsleitung dienen kann. Der durch die Perforationen 26 der Trommel 20 sowie zwischen den die Rutsche 35 bildenden Federzinken durchfallende Schmutz wird zweckmmäßig von einem den Bunker 31 in diesem Bereich überdachenden Schutzblech 39 aufgefangen und seitlich oder hinter der Maschine abgeworfen. Bei Verwendung von zwei im Transportweg der zu reinigenden Rodungsfrüchte hintereinander angeordneten Reinigungsstationen, etwa gemäß einer Kombination der Anordnungen gemäß der Figuren 1 und 2, wäre es in vorteilhafter Weise auch denkbar, die zu reinigenden Rodungsfrüchte in der ersten Reinigungsstation feucht vorzureinigen, etwa mit Hilfe eines Wasser-Luftstrahls, und in der nachgeordneten Reinigungsstation mit Hilfe von Luftstrahlen mit verhältnismäßig geringem oder gar keinem Wasergehalt nachzureinigen und zu trocknen.

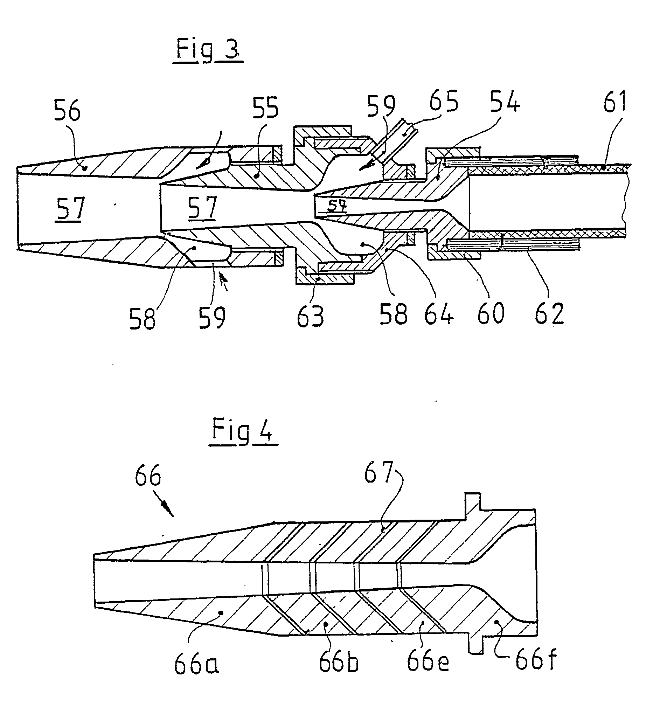

Die Düsen 19 bzw. 19a bzw. 19b bzw. 19c werden mit einem Druckmedium, zweckmäßig mit Luft bzw. mit einem Luft-Wassergemisch beaufschlagt. Zur Bewerkstelligung eines besonders geringen Verbrauchs an Druckmedium bei dennoch guter Reinigungseffektivität können die Düsen einfach als Venturidüsen ausgebildet sein, die mit Hilfe eines Initialstrahls, der von einer Druckquelle versorgt wird, Luft aus der Umgebung bzw. Flüssigkeit aus einem Flüssigkeitstank bzw. einer Ablaufrinne einer Saftpresse oder dergleichen ansaugen. Die in Figur 3 dargestellte Doppel-Venturidüse besteht aus drei Blasrohren 54, 55, 56, die koaxial hintereinander angeordnet sind und zwar so, daß zwischen dem Eingang der Düsenbohrung 57 des jeweils vorderen Blasrohrs und der vorderen Stirnseite des jeweils hinteren Blasrohrs ein kleiner Ansaugspalt gebildet wird, der über eine vorgeordnete, querschnittsmäßig erweiterte Mischkammer 58 mit Ansaugöffnungen 59 kommuniziert. Das innere Blasrohr 54 ist mittels einer Überwurfmutter 60 an einer mit einem Versorgungsschlauch 61 verstifteten Schelle 62 festgelegt. Im Bereich des äußeren Umfangs des inneren Blasrohrs 54 und des diesem nachgeordneten Blasrohrs 55 ist jeweils ein Außengewinde zum Halten des jeweils vorgeordneten Blasrohrs vorgesehen. Diese können entweder direkt aufgeschraubt sein, wie anhand des Blasrohrs 56 gezeigt ist, oder mit Hilfe einer Überwurfmutter 63 an einem auf dem vorgeordneten Strahlrohr festgelegten Zwischenstück 64 festgespannt sein, was die Ausbildung verhältnismäßig großer Mischkammern ermöglicht. Die Ansaugöffnungen 59 des vorderen Strahlrohrs 56 münden in die Umgebung, so daß hierüber zusätzliche Luft angesaugt wird, wodurch der Gesamtdurchsatz wesentlich erhöht werden kann. Die einzige Ansaugöffnung 59 des mittleren Blasrohrs 55 ist mit einem Anschlußstutzen 65 für einen Saugschlauch versehen, der etwa zu einem Tank oder zu einem Sammeltrog einer Saftpresse oder dergleichen geführt werden kann und über den somit Flüssigkeit angesaugt werden kann, die dazu dient, den Luftstrahl zu härten bzw. eine Feuchtreinigung zu gewährleisten.

In der Ausführungsform gemäß Figur 3 sind die Blasrohre einstückig ausgeführt. Der Figur 4 liegt eine mehrstückige Ausführungsform zugrunde. Das hier dargestellte Blasrohr 66 besteht aus mehreren Abschnitten 66a, 66b-f, die in axialer Richtung miteinander verspannt sind und die im Bereich der aufeinanderliegenden Stirnseiten mit radial geführten Ausnehmungen 67 zur Bildung von Ansaugöffnungen versehen sind.

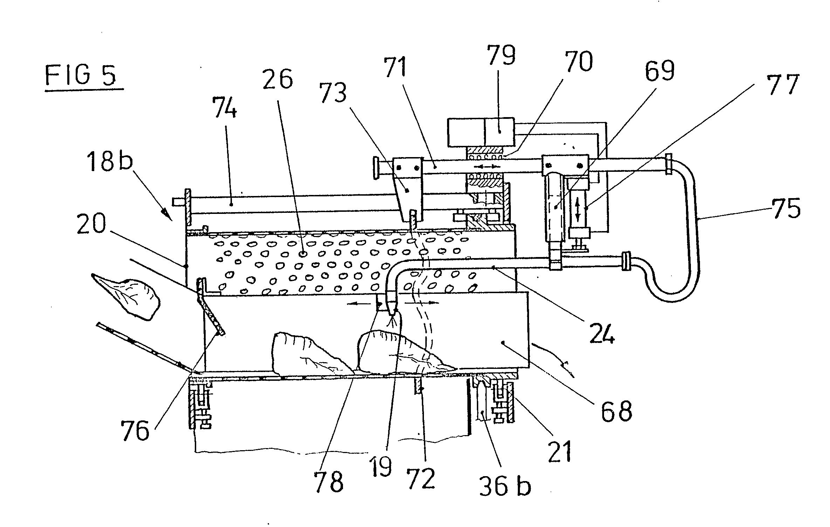

Eine andere Maßnahme zur Verringerung des Luftverbrauchs kann darin bestehen, die Düse bzw. Düsen 19 einer parallel zur Rübentransportrichtung verlaufenden, hin- und hergehenden Bewegung zu unterwerfen, wie Figur 5 zeigt. Der grundsätzliche Aufbau der in Figur 5 als Ganzes mit 18b bezeichneten Reinigungsstation entspricht dem grundsätzlichen Aufbau der Reinigungsstation 18a von Figur 2 bzw. 18 von Figur 1. Für gleiche Teile finden daher zweckmäßig gleiche Bezugszeichen Verwendung. Andererseits kann jedoch die Bewegung der Düse bzw. Düsen auch in Verbindung mit anderen Ausführungsbeispiel Verwendung finden.

Der in die auf Stützsohlen 21 gelagerte, hier mittels eines Keilriemens 36b angetriebene, mit Perforationen 26 versehene Trommel 20 hineinragende Düsenhalter 24 ist hier mittels einer oder mehrerer Streben 69 an einer durch eine gestellfest gehaltene Laufbüchse gebildete Längsführung 70 hindurchgreifenden Stellstange 71 gehalten, die ihrerseits mit einer eine hin- und hergehende Bewegung bewerkstelligenden Antriebsvorrichtung verbunden ist. Hierzu ist im dargestellten Ausführungsbeispiel die mittels des Keilriemens 36b in Umfangsrichtung angetriebene Trommel 20 mit einer Steuerkurve 72 versehen, die mit einem Tastorgan 73 zusammenwirkt, das an der Stellstange 71 befestigt ist. Die Steuerkurve 72 ist einfach als auf den Außenumfang der Trommel 20 aufgesetzter, einen nockenförmigen Verlauf aufweisender Ring ausgebildet. Das Tastorgan 73 ist als diesen Ring umfassende Gabel ausgebildet. Zur Stabilisierung ist das Tastorgan 73 auf einer parallel zur Längsführung 70 angeordneten, gestellfest gehaltenen, eine weitere Längsführung bildenden Führungsstange 74 geführt. Der Düsenhalter 24 ist als Rohr ausgebildet, das als Versorgungsleitung dient. Im dargestellten Ausführungsbeispiel ist der Düsenhalter 24 mittels eines beweglichen Schlauchabschnitts 75 mit der ebenfalls als Rohr ausgebildeten Stellstange 71 verbunden, die über eine nicht näher dargestellte Leitung mit dem Kompressor verbunden sein kann.

Der Verlauf der Steuerkurve weist in Richtung der Trommelachse solche Auslenkungen auf, daß während der hierdurch bewerkstelligten hin- und hergehenden Bewegung der Düse bzw. Düsen 19 jede hierunter vorbeilaufende Rube mehrmals, zumindest einmal während der entgegen der Rübentransportrichtung verlaufenden Hinbewegung und einmal während der in Rübentransportrichtung verlaufenden Herbewegung überstrichen wird. Die Reinigungsstation 18b gemäß Figur 8 kommt daher in vorteilhafter Weise mit einer am Düsenhalter 24 befestigten Düse 19 aus, was einen besonders geringen Luftverbrauch ergibt. Da die hiervon gereinigten Rüben jedoch mehrmals überstrichen werden, ergibt sich dennoch ein ausgezeichneter Reinigungswirkungsgrad. Zweckmäßig ist die entgegen der Rübentransportrichtung verlaufende Hinbewegung langsamer als die Rückbewegung. Dies läßt sich einfach durch eine entsprechende Steigung der in Trommelachsrichtung verlaufenden Ausschläge der Steuerkurve 72 bewerkstelligen. Die Stellstange 71 und die dieser zugeordneten Längsführungen 70 und 74 verlaufen parallel zu der als Anschlag für die die Trommel 20 durchsetzenden Rüben dienenden, als Blechstreifen oder Brett oder dergleichen ausgebildeten Leiteinrichtung 68, so daß die von der Düse 19 abgegebenen Reinigungsstrahlen zuverlässig auf die zu reinigenden Rüben auftreffen. Im Bereich der Eingangsseite der Trommel 20 ist im dargestellten Ausführungsbeispiel eine zur Ausrichtung der Rüben dienende Ausrichteinrichtung 76 vorgesehen. Anstelle der Steuerkurve 72 mit zugeordneter Tasteinrichtung 73 könnte auch ein anderer Antrieb des Düsenhalters 24 vorgesehen sein, etwa ein Zylinder-Kolbenaggregat.

Bei dem in Figur 5 dargestellten Beispiel ist die Düse 19 in weiterer Vervollkommnung während der hin- und hergehenden Bewegung gleichzeitig so auf- und abbewegbar, daß sie während ihres gesamten Einsatzes praktisch auf annähernd gleichem Abstand zu der zu reinigenden, einen keilförmigen Querschnitt aufweisenden Rübe gehalten wird. Hierdurch wird einer Streuung der Reinigungsstrahlen weitgehend vorgebeugt. Diese auf- und abgehende Düsenbewegung wird hier mittels eines zwischen Stellstange 71 und Düsenhalter 24 angeordneten Zylinder-Kolben-aggregats 77 bewerkstelligt. Die Strebe 69 kann in diesem Fall einfach als Teleskop ausgebildet sein. Die Steuerung des Zylinder-Kolbenaggregats 77 kann über einen Sensor erfolgen, der die unter der Düse 19 hindurchgehenden Früchte berührungslos oder berührend abtastet und mit einem Steuerventil 79 verbunden ist.

## Patentansprüche

1. Vorrichtung zur Feldreinigung von Rodungsfrüchten, insbesondere Zuckerrüben, mit mindestens einer in Durchlaufbetrieb mit Rodungsfrüchten beschickbaren Reinigungsstation (18 bzw. 18a bzw. 18b), die mit wenigstens einer auf die zu reinigenden Rodungsfrüchte gerichteten Düse (19) zur allseitigen Beaufschlagung der Rodungsfrüchte mit einem Druckmedium versehen ist, dadurch gekennzeichnet, daß die Reinigungsstation (18 bzw. 18a bzw. 18b) eine in Umfangsrichtung angetriebene, stirnseitig offene und mit einer Stirnseite im Bereich einer Einwurfvorrichtung angeordnete, im Bereich ihrer Wandung mit Perforationen (26) versehene Trommel (20) aufweist, der eine den unter der Düse bzw. den Düsen (19) hindurchführenden Weg der die Reinigungsstation (18 bzw. 18a bzw. 18b) durchlaufenden Rodungsfrüchte definierende Leiteinrichtung (68) zugeordnet ist, und daß die Düse bzw. Düsen (19), die als Venturidüse bzw. -düsen ausgebildet ist bzw. sind, in Umfangsrichtung stationär angeordnet und an einen stirnseitig in den Innenraum der Trommel (20) hineinstechenden Halter (24) befestigt sind.

2. Vorrichtung nach Anspruch 1, dadurch gekennzeichnet, daß die Innenoberfläche der Trommel (20) mit einem Schneckengang (23) versehen ist.

3. Vorrichtung nach einem der vorhergehenden Ansprüche, dadurch gekennzeichnet, daß die Trommel (20) in Förderrichtung leicht nach unten geneigt ist.

4. Vorrichtung nach einem der vorhergehenden Ansprüche, dadurch gekennzeichnet, daß die Trommel (20) mit ihrem Umfang auf Stützrollen (21) abgestützt ist und mit einem Treibelement zusammenwirkt.

5. Vorrichtung nach einem der vorhergehenden Ansprüche 1 bis 4, dadurch gekennzeichnet, daß bei einer Erntemaschine eine Reinigungsstation im Transportweg der Rodungsfrüchte zwischen einer Rodeeinrichtung (9) und einem Bunker (31) unmittelbar hinter der Rodeeinrichtung (9) angeordnet ist, wobei bei mehreren nebeneinander angeordneten, jeweils eine Reihe bedienenden Rodeeinrichtungen vorzugsweise jeder Rodeeinrichtung (9) eine Reinigungsstation (18) zugeordnet ist, und/oder daß eine Reinigungsstation im Bereich oberhalb des Bunkers (31) angeordnet ist.

6. Vorrichtung nach einem der vorhergehenden Ansprüche, gekennzeichnet durch eine hydraulische Antriebseinrichtung mit einer Hydraulikpumpe (30) und mehreren hiervon beaufschlagbaren, Einzelantriebe bildenden Motoren (6, 15, 28, 34), insbesondere zum Antrieb der Trommel (20) und/oder eines die Düsen (19) mit Luft versorgenden Kompressors (27).

7. Vorrichtung nach einem der vorhergehenden Ansprüche, dadurch gekennzeichnet, daß die Düse bzw. die Düsen (19) in Transportrichtung der die zugeordnete Reinigungsstation durchsetzenden Früchte hin- und herbewegbar angeordnet sind.

8. Vorrichtung nach Anspruch 7, dadurch gekennzeichnet, daß die Düse bzw. die Düsen (19) mittels einer auf die Trommel (20) aufgesetzten Steuerkuve (72) hin- und herbewegbar sind.

9. Vorrichtung nach einem der vorhergehenden Ansprüche, dadurch gekennzeichnet, daß die Düsen bzw. die Düse (19) in Strahlrichtung bewegbar angeordnet und auf annähernd gleichbleibendem Abstand von der Oberfläche der zu reinigenden Frucht gehalten ist bzw. sind.

10. Vorrichtung nach einem der vorhergehenden Ansprüche, dadurch gekennzeichnet, daß die Düse bzw. die Düsen (19) jeweils mindestens ein Strahlrohr mit einer Düsenbohrung (57) aufweist bzw. aufweisen, die von einer gegenüber dem Düsenbohrungseintrittsquerschnitt erweiterten, mindestens eine Saugöffnung (59) aufweisenden Mischkammer (58) abgeht, in die ein an eine Versorgungsleitung (61) angeschlossenes, inneres Blasrohr hineinsticht.

11. Vorrichtung nach Anspruch 10, dadurch gekennzeichnet, daß zwei mit jeweils einer Mischkammer (58) versehene Blasrohre (55 bzw.

56) hintereinander angeordnet sind, wobei vorzugsweise die strahlaustrittsseitig vorgesehenen Saugöffnungen (59) in die Umgebung münden und mindestens eine andere Saugöffnung (59) mit einer Flüssigkeits-Versorgungsleitung verbunden ist.

12. Vorrichtung nach Anspruch 11, dadurch gekennzeichnet, daß das strahlaustrittsseitige Strahlrohr im Bereich der Düsenbohrung aus mehreren miteinander verspannten Abschnitten (66a-66f) besteht, die im Bereich ihrer Stirnseiten mit in die Umgebung mündenden Ausnehmungen (67) versehen sind.

13. Vorrichtung nach Anspruch 5, dadurch gekennzeichnet, daß die Rodeeinrichtung (9) mindestens ein Walzenpaar (13 bzw. 14) mit zwei V-förmig nach vorne geöffneten, von vorne nach hinten geneigten Walzen aufweist, die vorzugsweise mittels eines Hydraulikmotors (15) angetrieben sind, wobei vorzugsweise auf jeder Seite der Walzenpaare (13, 14) ein Hydraulikmotor (15) vorgesehen ist.

14. Vorrichtung nach Anspruch 13, dadurch gekennzeichnet, daß zwei übereinander angeordnete Walzenpaare (13, 14) vorgesehen sind, wobei die auf jeweils einer Seite angeordneten Walzen mit in gegenseitigem Eingriff stehenden Oberflächenrillen bzw. -stegen versehen sind.

**Claims**

1. A system for cleaning roots, more specially sugar beet, in the field with at least one cleaning station (18 or 18a or 18b respectively) designed to take up the roots continuously, having at least one nozzle (19) directed towards the roots to be cleaned for jetting a medium under pressure onto all sides of the roots, characterized in that the cleaning station (18 or 18a or 18b respectively) is provided with a drum (20) driven for moving in direction of circumference, open at the and face, with one end face in the area of an input device and having perforations (26) in its wall, a guide system (68) defining the transport path of the roots under the nozzle of nozzles respectively (19) through the cleaning station (18 or 18a or 18b respectively) being attributed to the drum, and that the nozzle or nozzles respectively (19) which is/are designed as venturi nozzle or nozzles respectively is/are fix-positioned in the direction of circumference and fixed to a support (24) stretching into the interior of the drum (20) at the end face.

2. A system as claimed in claim 1, characterized in that the inner face of the drum (20) has a screw-like lip (23).

3. A system as claimed in anyone of the preceding claims, characterized in that the drum (20) slopes somewhat downwards in the direction of transport.

4. A system as claimed in anyone of the preceding claims, characterized in that the drum (20) is supported with its circumference on rollers (21) and functions together with a drive element.

5. A system as claimed in anyone of the preceding claims 1 to 4, characterized in that a cleaning station in a harvester is situated in the transport path of the roots between a lifter (9) and a bunker (31) immediately after the lifter (9), wherein with several lifters placed side-by-side and serving each one row, preferably each lifter (9) is provided with a cleaning station (18), and/or that a cleaning station is situated in the area above the bunker (31).

6. A system as claimed in anyone of the preceding claims, characterized by a hydraulic driving device with a hydraulic pump (30) and several motors (6, 15, 28, 34) driven by it and constituting single driving devices in particular used for driving the drum (20) and/or a compressor (27) providing the nozzles with air.

7. A system as claimed in anyone of the preceding claims, characterized in that the nozzle or nozzles respectively (19) is/are moved forwards and backwards in the direction of transport of the roots running through the respective cleaning station.

8. A system as claimed in claim 7, characterized in that the nozzle or nozzles respectively (19) is/are moved forwards and backwards by means of a driving cam (72) fixed to the outer wall of the drum (20).

9. A system as claimed in anyone of the preceding claims, characterized in that the nozzles or nozzle respectively (19) are/is placed movably in the direction of the jet and kept at generally the same distance from the surface of the root to be cleaned.

10. A system as claimed in anyone of the preceding claims, characterized in that the nozzle or nozzles respectively (19) is/are provided each with at least one jet pipe with a nozzle bore (57) in the mixing space (58) which is wider than the inlet cross-section of the nozzle bore and has at least one aspiration opening (59), and into which enters an inner blowing tube connected with a supply pipe.

11. A system as claimed in claim 10, characterized in that two blowing tubes (55 or 56 respectively), each of which has one mixing space, are placed one in front of the other whereby preferably the aspiration openings (59) designed on the side of the jet outlet open into the atmosphere, and at least one other aspiration opening (59) is connected with a liquid supply pipe.

12. A system as claimed in claim 11, characterized in that the jet pipe of the side of the jet outlet is, in the area of the nozzle bore, made up of several sections (66a-66f) forced and locked together, which at their end faces are provided with recesses (67) opening into the atmosphere.

13. A system as claimed in claim 5, characterized in that the lifter (9) is provided with at least one pair of rollers (13 or 14 respectively) opening like a letter V towards the front and sloping from the front to the back, these rollers being turned preferably by a hydraulic motor (15), whereby one hydraulic motor is designed preferably for each end of the roller pairs (13, 14) .

14. A system as claimed in claim 13, characterized in that two roller pairs (13, 14) are provided with the rollers placed on one side having on their outer faces hollows or lips respectively meshing together.

## Revendications

1. Dispositif de nettoyage, à même le champ, de plantes arrachées, en particulier des betteraves sucrières, équipé au minimum d'un poste de nettoyage (18 ou 18a ou 18b) pouvant être alimenté en continu en plantes récoltées qui est muni d'au moins une buse (19) orientée sur les plantes arrachées à nettoyer en vue d'en balayer toute la surface au moyen d'un fluide sous pression, caractérisé en ce que le poste de nettoyage (18 ou 18a ou 18b) possède un tambour (20) à commande périphérique ouvert sur l'avant, équipé sur sa face antérieure d'un dispositif d'alimentation et d'une paroi perforée (26) auquel est associé un dispositif de guidage (68) qui délimite un canal situé sous la ou les buses (19) et emprunté par les plantes arrachées qui traversent le poste de nettoyage (18 ou 18a ou 18b) et en ce que les buses (19) de type venturi sont fixées à demeure dans le sens de rotation sur un support (24) qui pénètre par l'avant à l'intérieur du tambour (20).

2. Dispositif selon la revendication 1, caractérisé en ce que la surface intérieure du tambour (20) est munie d'un pas de vis sans fin (23).

3. Dispositif selon l'une des revendications précédentes, caractérisé en ce que le tambour (20) est légèrement incliné vers le bas dans le sens du transport des plantes.

4. Dispositif selon l'une des revendications précédentes, caractérisé en ce que l'enveloppe du tambour (20) repose sur des rouleaux d'appui (21) et est mue par un élément d'entraînement.

5. Dispositif selon l'une des revendications précédentes 1 à 4, caractérisé en ce que, sur une arracheuse, un poste de nettoyage est intercalé dans le chemin de transport des plantes arrachées entre un dispositif d'arrachage (9) et une trémie (31) directement derrière le dispositif d'arrachage (9) alors que, en présence de plusieurs dispositifs d'arrachage contigus de type monorang, chaque dispositif d'arrachage est de préférence suivi d'un poste de nettoyage (18) et/ou qu'un poste de nettoyage est monté au dessus de la trémie (31).

6. Dispositif selon l'une des revendications précédentes, caractérisé par un dispositif d'entraînement hydraulique flanqué d'une pompe hydraulique (30) et de plusieurs moteurs (6, 15, 28, 34) qui peuvent être alimentés par cette pompe hydraulique et constituent autant d'entraînements individuels, en particulier pour entraîner le tambour (20) et/ou un compresseur (27) qui alimente les buses (19) en air.

7. Dispositif selon l'une des revendications précédentes, caractérisé en ce que la ou les buses (19) sont disposées de manière à pouvoir être animées d'un mouvement de va-et-vient dans le sens de transport des plantes qui traversent le poste de nettoyage correspondant.

8. Dispositif selon la revendication 7, caractérisé en ce que la ou les buses (19) peuvent être animées d'un mouvement de va-et-vient au moyen d'une came de commande (72) montée sur le tambour (20).

9. Dispositif selon l'une des revendications précédentes, caractérisé en ce que la ou les buses (19) sont mobiles dans la direction du jet et peuvent être maintenues à une distance quasi constante de la surface des plantes à nettoyer.

10. Dispositif selon l'une des revendications précédentes, caractérisé en ce que la ou les buses (19) présentent chacune au moins une lance dont l'orifice (57) débouche sur une chambre de mélange (58) dont la section est supérieure à la section de l'orifice d'entrée de la buse, qui présente au moins un orifice d'aspiration (59) et dans laquelle pénètre une lance intérieure raccordée à une conduite d'alimentation (61).

11. Dispositif selon la revendication 10, caractérisé en ce que deux lances (55 et 56), toutes deux équipées d'une chambre de mélange (58), sont disposées l'une derrière l'autre alors que les orifices d'aspiration (59) prévus du côté de la sortie du jet débouchent dans le milieu ambiant et qu'au moins un autre orifice d'aspiration (59) est raccordé à une conduite d'alimentation en liquide.

12. Dispositif selon la revendication 11 caractérisé en ce que la lance placée du côté de la sortie du jet se compose, au niveau de l'alésage de la buse, de plusieurs segments (66a-66f) reliés les uns aux autres qui, au droit de leurs faces antérieures, sont munis de sillons (67) qui débouchent dans le milieu ambiant.

13. Dispositif selon la revendication 5, caractérisé en ce que le dispositif d'arrachage (9) possède au moins une paire de rouleaux (13 ou 14), composée de deux rouleaux en forme de V, ouverts vers l'avant et inclinés d'avant en arrière qui sont de préférence entraînés par un moteur hydraulique (15), alors qu'un moteur hydraulique (15) est de préférence prévu de chaque côté des paires de rouleaux (13, 14).

14. Dispositif selon la revendication 13, caractérisé par deux paires de rouleaux (13, 14) superposées dont les rouleaux situés d'un côté présentent des rainures alors que les rouleaux situés de l'autre côté présentent des chevrons de manière à assurer leur prise.

Fig 1

## Fig 2

## Fig 3

## Fig 4

FIG 5